(19) Europäisches Patentamt / European Patent Office / Office européen des brevets

(11) **EP 3 803 637 B1**

(12) **FASCICULE DE BREVET EUROPEEN**

(45) Date de publication et mention de la délivrance du brevet:
**05.03.2025 Bulletin 2025/10**

(21) Numéro de dépôt: **19730693.9**

(22) Date de dépôt: **27.05.2019**

(51) Classification Internationale des Brevets (IPC):
**G06F 17/15** (2006.01)   **G01M 5/00** (2006.01)
**H03H 17/02** (2006.01)

(52) Classification Coopérative des Brevets (CPC):
**G06F 17/15; G01M 5/0008; G01M 5/0066;**
Y02B 10/30

(86) Numéro de dépôt international:
**PCT/EP2019/063655**

(87) Numéro de publication internationale:
**WO 2019/228982 (05.12.2019 Gazette 2019/49)**

(54) **PROCÉDÉ DE DÉTERMINATION D'UN DÉPLACEMENT D'AU MOINS UN POINT DE RÉFÉRENCE D'UN OBJET ET SYSTÈME METTANT EN OEUVRE LE PROCÉDÉ**

VERFAHREN ZUR BESTIMMUNG EINER VERSCHIEBUNG VON MINDESTENS EINEM REFERENZPUNKT EINES OBJEKTS UND SYSTEM ZUR UMSETZUNG DES VERFAHRENS

METHOD FOR DETERMINING A DISPLACEMENT OF AT LEAST ONE REFERENCE POINT OF AN OBJECT AND SYSTEM IMPLEMENTING THE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2018 FR 1800538**

(43) Date de publication de la demande:
**14.04.2021 Bulletin 2021/15**

(73) Titulaire: **SERCEL**
**44470 Carquefou (FR)**

(72) Inventeurs:
• **CARMONA, Mikael**
**38570 TENCIN (FR)**
• **PALEOLOGUE, Alexandre**
**01300 BELLEY (FR)**

(74) Mandataire: **Innovincia**
**11, avenue des Tilleuls**
**74200 Thonon-Les-Bains (FR)**

(56) Documents cités:
• **SEKIYA HIDEHIKO ET AL: "Visualization system for bridge deformations under live load based on multipoint simultaneous measurements of displacement and rotational response using MEMS sensors", ENGINEERING STRUCTURES, BUTTERWORTH, GB, vol. 146, 25 May 2017 (2017-05-25), pages 43 - 53, XP085054001, ISSN: 0141-0296, DOI: 10.1016/ J.ENGSTRUCT.2017.05.036**
• **HIDEHIKO SEKIYA ET AL: "Calculation method of bridge displacement from acceleration record", STRUCTURAL ENGINEERING & EARTHQUAKE ENGINEERING, vol. 72, no. 1, 2016, pages 61 - 74, XP055563906, ISSN: 2185-4653, DOI: 10.2208/jscejseee.72.61**
• **TOSHIHARU ARAKAWA ET AL: "FREQUENCIES AND DAMPING RATIOS OF A HIGH RISE BUILDING BASED ON MICROTREMOR MEASUREMENT", 13TH WORLD CONFERENCE ON EARTHQUAKE ENGINEERING, 2004, Vancouver, Canada, pages 1 - 14, XP055563936**

**(Cont. page suivante)**

- SURESH THENOZHI ET AL: "A novel numerical integrator for structural control and monitoring", INFORMATION REUSE AND INTEGRATION (IRI), 2012 IEEE 13TH INTERNATIONAL CONFERENCE ON, IEEE, 8 August 2012 (2012-08-08), pages 680 - 686, XP032237923, ISBN: 978-1-4673-2282-9, DOI: 10.1109/IRI.2012.6303075
- HIDEHIKO SEKIYA ET AL: "Portable Weigh-In-Motion based on displacement measurement using MEMS accelerometers", JOURNAL OF STRUCTURAL MECHANICS AND EARTHQUAKE ENGINEERING, vol. 72, no. 3, 2016, pages 364 - 379, XP055563910, DOI: https://doi.org/10.2208/jscejseee.72.364
- HIDEHIKO SEKIYA ET AL: "Determination Method of Bridge Rotation Angle Response Using MEMS IMU", SENSORS, vol. 16, no. 11, 9 November 2016 (2016-11-09), pages 1882, XP055563914, DOI: 10.3390/s16111882
- CARLO RAINIERI ET AL: "Some Remarks on Experimental Estimation of Damping for Seismic Design of Civil Constructions", SHOCK AND VIBRATION, vol. 17, 2010, NL, pages 383 - 395, XP055564762, ISSN: 1070-9622, DOI: 10.3233/SAV-2010-0534

**Description**

**Domaine technologique**

La présente invention concerne un procédé de détermination d'un déplacement d'au moins un point de référence d'un objet et un système mettant en œuvre le procédé. Plus particulièrement, le procédé de détermination d'un déplacement s'applique à des objets, notamment des ouvrages d'infrastructures comme des ponts, des bâtiments ou des éoliennes qui peuvent se déformer dynamiquement sous l'emprise par exemple d'une charge dynamique (c'est-à-dire en particulier en mouvement) ou d'un phénomène climatique comme le vent ou d'un événement sismique.

**L'état de la technique**

Dans les années 1960 à 1990, les infrastructures de transport, notamment de transport routier et ferroviaire ont connu un essor très important donnant lieu à la construction de nombreuses routes et ponts. Toutefois, lors de leur construction, les ponts ont par exemple été construits pour un nombre limité de passages de véhicules par jour, notamment en ce qui concerne le trafic de poids lourds.

Or, depuis environ vingt ans, le trafic routier a augmenté de façon très importante de sorte que pour de nombreux ponts, les passages par jour dépassent largement les limites de nombre et de poids de véhicules par jour initialement prévues. Ceci entraîne une dégradation plus rapide des ponts, en particulier du fait des vibrations subies lors des passages des poids lourds.

Selon un rapport de 2016 mandaté par le ministère allemand de l'Économie, les infrastructures de transport en Allemagne se détériorent plus vite qu'elles ne sont réparées.

Près de 2.500 ponts routiers en Allemagne sont aujourd'hui classés comme *«insuffisants»* et ne peuvent par conséquent être empruntés que de manière restreinte par les automobilistes. Parmi eux le pont Schierstein, situé sur l'autoroute qui relie Wiesbaden à Mayence: promu à la destruction selon un rapport commandé il y a 10 ans par le ministère allemand des Transports, en raison d'un risque de *«violente rupture sans signe annonciateur»*. Celui-ci est néanmoins toujours en usage, et traversé quotidiennement par 80.000 véhicules, sur une seule voie de circulation.

D'autres ponts en Allemagne sont fermés au trafic de poids lourds en Rhénanie Westphalie pour les mêmes raisons, ce qui cause des difficultés pour le franchissement du Rhin et le transport des marchandises sur des axes est-ouest.

Afin de prévenir de tout accident et fournir éventuellement un service limité en toute sécurité, il est nécessaire de surveiller de près ces ponts et déterminer quand un pont subit par exemple des vibrations trop importantes par rapport à sa structure et risque de céder à certains endroits.

Une problématique similaire se pose dans le cas des éoliennes par exemple qui sont soumises à des déformations du fait du vent et qui nécessitent aussi une surveillance régulière.

Pour cela, on connait des systèmes permettant de mesurer la déformation par exemple d'un pont de façon dynamique.

A partir de ces mesures, on peut déterminer la fatigue des matériaux et caractériser la détérioration du pont. Ceci permet en particulier d'alerter l'opérateur du pont (par exemple une société d'autoroute ou les pouvoirs publics) afin de pouvoir prendre les mesures qui s'imposent en cas de détérioration trop importante.

Un exemple d'un tel système est par exemple connu de l'article « The determination of bridge displacement using measured acceleration » par KiTae park et al, Engineering Structures 27 (2005) pp371-378.

Dans cet article, il est décrit que l'on peut remonter à un déplacement de certains points de référence du pont, en mesurant au niveau de ces points par des capteurs de mesure les accélérations subies par la structure et en pratiquant une double intégration.

En effet, il est largement connu en physique que l'accélération est la double dérivée dans le temps du déplacement d'un objet en fonction du temps. En conséquence, en empruntant le chemin inverse, on peut remonter théoriquement depuis la mesure de l'accélération, au déplacement d'un objet dans le temps.

Cette approche est décrite dans l'article susmentionné et la double intégration y est pratiquée de façon numérique.

Cependant, une telle approche se heurte rapidement à divers problèmes en particulier l'évolution rapide de l'erreur en fonction du temps et du rapport signal à bruit ainsi que l'instabilité en présence de basses fréquences (< 1 Hz) et enfin la numérisation en elle-même.

L'article susmentionné cherche également à mieux exploiter les résultats de mesure.

Cependant, l'approche proposée dans ce document ne semble pas convaincante et pas assez robuste pour permettre un déploiement à grande échelle.

La présente invention vise à pallier au moins partiellement aux inconvénients ci-dessus, en proposant notamment un procédé et un système associé permettant d'exploiter de façon plus robuste des mesures d'accélération afin de déterminer le déplacement d'au moins un point d'un objet, de préférence de plusieurs points d'un objet, comme par exemple des points de référence choisis sur un pont ou sur une éolienne.

Bref résumé de l'invention

À cet effet, l'invention a pour objet un procédé de détermination d'un déplacement d'au moins un point de référence d'un objet lors d'un événement, un événement étant défini par le fait que l'accélération du point de référence de l'objet est nulle pendant une durée prédéfinie avant et après l'événement, dans lequel

- on mesure par au moins un capteur au niveau du point de référence, un profil temporel des accélérations selon au moins une direction prédéfinie,

caractérisé en ce que :

- on détermine des coefficients des premières et secondes fonctions paramétrables permettant de reconstruire le profil temporel des accélérations sous forme de la convolution d'une source et d'une somme de produits de premières et secondes fonctions paramétrables par des coefficients, chacune des premières et secondes fonctions paramétrables dont le produit possède une solution analytique de double intégration et les premières fonctions étant composées de facteurs d'amortissements,
- on détermine à partir de la solution analytique de double intégration de la convolution entre la source et la somme de produits de première et seconde fonctions paramétrables et des coefficients déterminés des premières et secondes fonctions, le déplacement du point de référence selon la direction prédéfinie dans le temps.

On comprend donc que le traitement spécifique des signaux de mesure des accélérations permet de déterminer de façon robuste le déplacement d'au moins un point de référence dans le temps.

L'invention peut comprendre un ou plusieurs des aspects suivants pris isolément ou en combinaison :
Selon un exemple, les premières fonctions sont des fonctions exponentielles décroissantes.

Selon un autre exemple, les secondes fonctions sont des fonctions polynomiales ou des fonctions périodiques sinus ou cosinus.

On peut par exemple déterminer par analyse spectrale des fréquences de décomposition en particulier des fréquences naturelles d'accélération du point de référence de l'objet.

Selon un autre aspect, on détermine un déplacement selon un ou plusieurs axes de plusieurs points de référence d'un objet lors d'un événement, et on mesure de manière synchronisée avec plusieurs capteurs de mesure associés à plusieurs points de référence, des profils temporels des accélérations selon au moins une direction prédéfinie.

Chaque point de référence est par exemple associé à un capteur de mesure et les points de références peuvent être distribués sur l'objet selon un maillage prédéfini, notamment à maille régulière ou irrégulière, comme sur une ligne, en particulier une ligne droite, ou une ou plusieurs faces de l'objet.

Selon un exemple, les points de référence sont espacés régulièrement selon un axe longitudinal de l'objet perpendiculaire à une direction de la force gravitationnelle.

Selon un autre aspect, on traite le profil temporel des accélérations avant la détermination des coefficients des premières et secondes fonctions paramétrables pour en retirer une composante statique et/ou géométrique.

Selon encore un autre aspect, on estime dans chaque point de référence le déplacement *d(t)* d'un point de référence de l'objet en fonction du temps t en utilisant la formule suivante :

$$d(t) = (H_{\text{procede}} \otimes a)(t) \text{ pour } t \in [t_1, t_2]$$

*où $t_1$ et $t_2$* correspondent aux instants de début et fin d'un événement. avec :

$$H_{\text{procede}}(t) = \sum_{k=1}^{N} b_k h_k(t) + c_k h_k(t + \tau_k)$$

$$b_k = \frac{(\alpha_k^2 - 4\pi^2 f_k^2)}{(\alpha_k^2 + 4\pi^2 f_k^2)^2}$$

$$c_k = \frac{4\pi\alpha_k f_k e^{\frac{\alpha_k}{4f_k}}}{(\alpha_k^2 + 4\pi^2 f_k^2)^2}$$

$h_k(t)$ : filtre passe-bande autour de la fréquence $f_k$

$$\tau_k = \frac{1}{4f_k} \; .$$

On applique par exemple une fenêtre glissante d'observation aux signaux de mesures des profils temporels des accélérations selon une direction prédéfinie.

L'invention concerne également un système de détermination d'un déplacement d'au moins un point de référence d'un objet lors d'un événement, un événement étant défini par le fait que l'accélération du point de référence de l'objet est nulle pendant une durée prédéfinie avant et après l'événement, comprenant

- au moins un capteur de mesure configuré pour mesurer au niveau d'un point de référence d'un objet un profil temporel des accélérations selon une direction prédéfinie,
- une unité de traitement configurée pour
- déterminer des coefficients des premières et secondes fonctions paramétrables permettant de reconstruire le profil temporel des accélérations sous forme de la convolution d'une source et d'une somme de produits de premières et secondes fonctions paramétrables par des coefficients, chacune des premières et secondes fonctions paramétrables dont le produit possède une solution analytique de double intégration et les premières fonctions étant composées de facteurs d'amortissements

    o déterminer à partir de la solution analytique de double intégration de la convolution entre la source et la somme de produits de première et seconde fonctions paramétrables et des coefficients déterminés des premières et secondes fonctions, le déplacement du point de référence selon la direction prédéfinie dans le temps.

Le système peut comprendre un ou plusieurs des aspects suivants pris isolément ou en combinaison :
Les premières fonctions sont par exemple des fonctions exponentielles décroissantes.

Les secondes fonctions sont par exemple des fonctions polynomiales ou des fonctions périodiques sinus ou cosinus.

L'unité de traitement peut être en outre configurée pour déterminer par analyse spectrale des fréquences naturelles l'accélération du point de référence de l'objet.

Le système comprend par exemple une pluralité de capteurs de mesure synchronisés configurés pour mesurer les accélérations de plusieurs points de référence d'un objet lors d'un événement, chaque point de référence est associé à un capteur de mesure et les points de références sont distribués sur l'objet selon un maillage prédéfini, notamment à maille régulière ou irrégulière, comme sur une ligne, en particulier une ligne droite, ou une ou plusieurs faces de l'objet.

Les points de référence peuvent être espacés régulièrement selon un axe longitudinal de l'objet perpendiculaire à une direction de la force gravitationnelle.

L'unité de traitement peut être configurée pour traiter le profil temporel des accélérations en retirant une composante statique et/ou géométrique avant la détermination des coefficients des premières et secondes fonctions paramétrables.

L'unité de traitement est notamment configurée pour estimer le déplacement $d(t)$ de chaque point de référence de l'objet en fonction du temps t en utilisant la formule suivante :

$$d(t) = (H_{\mathrm{procede}} \otimes a)(t) \text{ pour } t \, \epsilon \, [t_1, t_2]$$

où $t_1$ et $t_2$ correspondent aux instants de début et fin d'un événement. avec :

$$H_{\mathrm{procede}}(t) = \sum_{k=1}^{N} b_k h_k(t) + c_k h_k(t + \tau_k)$$

$$b_k = \frac{(\alpha_k^2 - 4\pi^2 f_k^2)}{(\alpha_k^2 + 4\pi^2 f_k^2)^2}$$

$$c_k = \frac{4\pi \alpha_k f_k e^{\frac{\alpha_k}{4f_k}}}{(\alpha_k^2 + 4\pi^2 f_k^2)^2}$$

$h_k(t)$ : filtre passe-bande autour de la fréquence $f_k$

$$\tau_k = \frac{1}{4f_k} \;.$$

Les capteurs de mesures comprennent par exemple des accéléromètres MEMS.

### Bref descriptions des dessins

D'autres avantages et caractéristiques apparaîtront à la lecture de la description des figures suivantes, données à titre d'exemple non limitatif.

- la figure 1 montre un objet à observer équipé d'un système selon l'invention,
- la figure 2 montre un organigramme de différentes étapes du procédé selon l'invention,
- la figure 3 est un exemple d'un graphique de mesure montrant des amplitudes d'accélération en fonction du temps pour plusieurs capteurs de mesure du système de la figure 1,
- la figure 4 montre un exemple d'un graphique d'un signal de mesure permettant de déterminer des fréquences naturelles,
- la figure 5 montre un exemple d'un graphique permettant de déterminer un coefficient d'amortissement associée à une fréquence naturelle,
- la figure 6 montre sur un graphe un exemple de coefficients et de filtres déterminés pour trois fréquences de décomposition, et
- la figure 7 montre un exemple à un instant t donné, de la déformation dynamique de l'objet à observer.

Sur toutes les figures les mêmes références s'appliquent aux mêmes éléments.

Les réalisations décrites sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Par ailleurs, on est amené dans le présent exposé à indexer des éléments. Par exemple un élément peut porter un numéro de référence suivi d'un indice. Il s'agit alors de plusieurs éléments identiques par exemple disposés à des endroits différents. Ainsi par exemple un capteur de mesure peut être désigné de façon générale par la référence « 7 » et la référence « $7_1$ » désigne un capteur de mesure particulier.

Dans le présent exposé, on peut être amené à déterminer des coefficients des premières et secondes fonctions paramétrables. Par coefficients d'une fonction paramétrable, on entend tout paramètre permettant de déterminer une fonction spécifique.

Par exemple pour un polynôme :

$$f(t) = \sum_{k=0}^{N} a_k t^k$$

$a_k$ pour k allant de 0 à N, sont des coefficients de la fonction paramétrable f(t). Ces coefficients qui peuvent par exemple être déterminés par régression.

Par exemple pour une fonction paramétrable f(t) de type sinus :

$$f(t) = \sum_{k=0}^{N} a_k \sin(2\pi f_k t - \varphi_k)$$

$a_k, f_k, \varphi_k$ sont considérés au sens large comme des coefficients (y compris la fréquence $f_k$ et le déphasage $\varphi_k$) permettant de déterminer une fonction paramétrable spécifique.

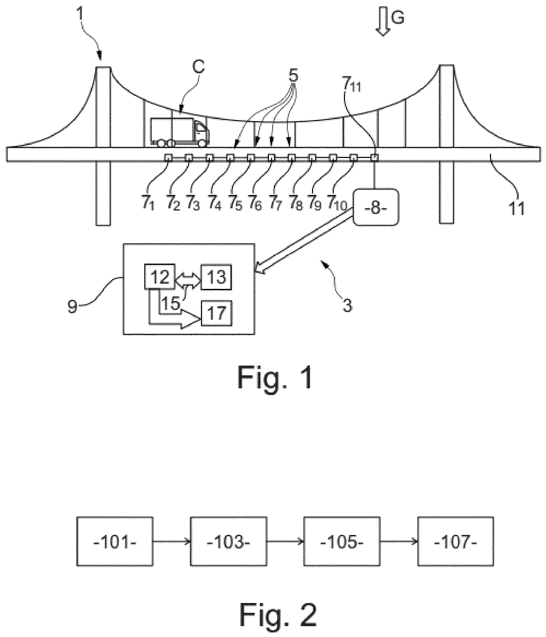

La figure 1 montre à titre d'exemple un objet 1, comme par exemple un pont, dont les déformations dans le temps doivent être observées pour pouvoir déterminer par exemple des dégradations de l'ouvrage et pouvoir prendre des mesures qui s'imposent pour prévenir tout risque pour les usagers (par exemple programmer une maintenance, bloquer l'accès au pont pour tous les véhicules ou seulement pour les poids lourds etc).

A cet effet, on utilise un système 3 de détermination d'un déplacement d'au moins un point de référence 5, dans le présent cas onze points de référence 5, le système 3 comprenant au moins un capteur de mesure 7, dans le présent cas onze capteurs de mesure $7_1$ à $7_{11}$.

Les capteurs de mesure 7 sont par exemple des accéléromètres (par exemple mono-, bi- ou trois- axes) fixés au pont aux points de référence 5. Donc à chaque point de référence 5 est associé un capteur de mesure 7. Les capteurs de mesure 7 sont par exemple réalisés sous forme de MEMS (« microelectromechanical system » en anglais pour microsystème électromécanique en français). De tels capteurs sont par exemple commercialisés par le Déposant et possèdent un bruit de mesure de 7 µg/sqrt(Hz) et une très grande stabilité dans le temps et en température.

D'autres capteurs de mesure 7 peuvent être envisagés comme par exemple des magnétomètres, des capteurs optiques, des capteurs à membrane etc.

Ces capteurs de mesure 7 sont reliés individuellement entre eux par un bus (en série par exemple), de façon filaire (liaison en série filaire synchrone) ou par connexion radiofréquence, puis par exemple via un nœud de contrôle 8 à une unité de traitement 9 permettant d'acquérir les signaux de mesure (accélération selon un ou plusieurs axes) venant de chaque capteur de mesure $7_1$ à $7_{11}$ individuels et de les traiter comme on va le décrire ci-après. L'unité de traitement 9 est donc configurée pour synchroniser les signaux de mesure venant des capteurs de mesure $7_1$ à $7_{11}$ individuels. La synchronisation de mesures dans un réseau de capteurs est connue en soi et par exemple décrit dans les articles suivants :

- F.Sivrikaya and B.Yener, « Time Synchronization in Sensor Networks: A Survey » IEEE Networks 2004,
- B. Sundararaman, U. Buy, A.D. Kshemkalyani, «Clock Synchronization in Wireless Sensor Networks: A Survey», Ad-Hoc Networks, 2005
- J. Elson, L. Girod, and D. Estrin. « Fine Grained Network Time Synchronization using Reference Broadcasts. », Proc. Fifth Symposium on Operating Systems Design and Implementation (OSDI 2002), Vol36, pp. 147-163, 2002.
- J. Elson and K. Romer. « Wireless Sensor Networks: A New Regime for Time Synchronization ». Proc. First Workshop on Hot Topics In Networks (HotNets-I), Princeton, New Jersey. Oct. 2002.
- R. C. Shah and J. Rabaey. « Energy Aware Routing for Low Energy Ad hoc Sensor Networks ». IEEE Wireless Communication Conference (WCNC), pp. 350-355,March 2002.
- S. Ganeriwal, R. Kumar, S. Adlakha, and M. Srivastava. « Network<wide Time Synchronization in Sensor Networks. » Technical Report, Networked and Embedded Systems Lab, Elec. Eng. Dept., UCLA, 2003.
- K. Romer. « Time Synchronization in Ad Hoc Networks. » Proc. ACM Symposium on Mobile Ad Hoc Networking and Computing (MobiHoc '01), pp. 173-182, Oct. 2001.
- M. L. Sichitiu and C. Veerarittiphan. « Simple, Accurate Time Synchronization for Wireless Sensor Networks. »
- Proc. IEEE Wireless Communications and Networking Conference (WCNC 2003), 2003
- J. van Greunen and J. Rabaey. « Lightweight Time Synchronization for Sensor Networks. » Proc. 2nd, ACM Int. Workshop on Wireless Sensor Networks and Applications (WSNA '03),California, Sept. 2000

Selon un aspect, ces capteurs de mesure 7 peuvent être reliés en série entre eux via un réseau filaire synchrone dont le protocole a été développé par le Déposant afin d'assurer en toute circonstance un temps de latence très faible et une synchronisation parfaite dans les mesures des capteurs 7 collectées sur le réseau, via le nœud de contrôle 8. On peut aussi envisager plusieurs nœuds de contrôle 8 si on augmente le nombre de capteurs 7. Chaque nœud de contrôle 8 est par exemple capable de gérer (en particulier acquérir et synchroniser les signaux de mesure) plusieurs capteurs 7, notamment plus de dix jusqu'à plusieurs dizaines de capteurs 7.

La fréquence d'acquisition des données par les capteurs de mesure 7 s'étale par exemple de 10 Hz à 1 kHz pour permettre une bonne synchronisation entre les différents capteurs 7, et les capteurs 7 peuvent être distants les uns des autres d'un mètre à plusieurs centaines de mètres.

Dans le présent exemple, l'objet 1 est un pont et les points de référence 5 sont disposés de façon régulière par exemple selon un axe longitudinal de l'objet 1, tel que sur le tablier 11 du pont 1 selon une ligne notamment droite et perpendiculaire à la direction de la force gravitationnelle indiquée de façon symbolique par la flèche G sur la Figure 1.

Selon d'autres exemples, les points de référence 5 peuvent être disposés selon une matrice bi- ou tridimensionnelle, avec un maillage régulier ou irrégulier. Les points de référence 5 peuvent par exemple se situer sur la surface d'un barrage (déploiement en surface) ou sur des faces d'un immeuble (déploiement volumique), par exemple un tour / un gratte-ciel.

Les capteurs de mesure 7 sont notamment configurés pour mesurer des accélérations / vibrations à chaque point de mesure formé par un point de référence 5 dans une direction parallèle à la force gravitationnelle G.

Selon une variante, les capteurs de mesure 7 sont des capteurs bi- ou tri-axes et configurés pour mesurer des accélérations / vibrations à chaque point de mesure formé par un point de référence 5 dans trois directions orthogonales dont une par exemple parallèle à la force gravitationnelle G. Ceci permet de mesurer par exemple des mouvements de torsion du tablier du pont 1.

Bien entendu, en fonction de l'ouvrage et des déformations à observer, il est possible de n'utiliser qu'un seul point de référence 5 et de déterminer le déplacement d'un seul point de référence 5 de l'objet 1 dans le temps.

En fonction de la géométrie du l'objet 1 à observer, on peut aussi disposer les capteurs de mesure 7 de façon irrégulière, en disposant par exemple plus de capteurs aux endroits où l'amplitude de déformation est plus forte (par exemple au milieu du pont) et moins de capteurs aux endroits où les déformations sont plus faibles (par exemple proches des piliers).

Bien entendu, le système 3 peut aussi être installé sur d'autres objets 1 que des ponts. Par exemple, on peut prévoir d'installer le système 3 sur un immeuble, notamment un gratte-ciel de grande hauteur ou une tour. Dans, ce cas les capteurs de mesure 7 sont installés par exemple, le long d'une ligne droite et parallèle à la verticale définie par la direction de la force gravitationnelle G, par exemple pour mesurer les fléchissements de l'immeuble sous l'effet du vent ou de secousses sismiques si l'immeuble est installé dans une zone à activité sismique. Selon un autre exemple, on peut prévoir d'installer le système 3 sur des éoliennes qui sont généralement exposées à des vents importants. En effet, le système 3 selon l'invention permettrait de détecter des signes annonciateurs témoignant par exemple : d'une faiblesse de structure permettant d'intervenir à temps avant qu'une rafale de vent ou un ouragan ne fasse plier le pylône de l'éolienne, ou encore d'un changement dans l'interaction sol/structure au niveau de l'ancrage qui est détectable au niveau du pylône.

L'unité de traitement 9 peut être localisée proche de l'objet 1 ou être disposée à distance, par exemple dans le nuage («cloud » en anglais).

L'unité de traitement 9 comprend par exemple un ordinateur équipé pour recevoir et acquérir directement ou via des nœuds de contrôle 8 des signaux de mesure.

L'unité de traitement 9 est en particulier équipée d'un microprocesseur 12 programmable, apte à exécuter des instructions enregistrées dans une mémoire 13 de l'unité de traitement 9. La mémoire 13 contient les instructions nécessaires pour la mise en œuvre des instructions et est raccordée au microprocesseur 12 par l'intermédiaire d'un bus 15 de transmission d'informations.

L'unité de traitement 9 comporte de plus une interface homme - machine 17 permettant notamment d'afficher, par exemple sur un écran, les résultats des traitements de données réalisés par le microprocesseur 12.

Le système 3 est configuré pour permettre la détermination d'un déplacement dans le temps d'au moins un point de référence 5 d'un objet 1 lors d'un événement.

Le point de référence 5 est ici un point de mesure, c'est-à-dire un endroit dont on souhaite connaître un déplacement en fonction du temps de l'objet 1 sous une contrainte extérieure.

Le déplacement est à considérer par rapport à une position de repos, c'est-à-dire sans contrainte extérieure, par exemple lorsqu'aucun véhicule C ne se trouve sur le pont 1. En général, les déplacements des points de référence 5 sont très faibles et de l'ordre d'un centième de mm à quelques cm au maximum.

Un événement lors duquel on souhaite déterminer le déplacement d'un point de référence 5, est par exemple défini par le fait que l'accélération du point de référence 5 de l'objet 1 est nulle pendant une durée prédéfinie avant et après l'événement, par exemple moins de 1s. Par accélération nulle, on entend « strictement nulle » ou inférieure à un seuil prédéfini comme par exemple inférieure au bruit de mesure dont la valeur est connue et propre à chaque capteur de mesure 7.

Le déposant de la présente demande a constaté que pour des objets généralement observés, comme par exemple des ponts ou des éoliennes, il existe toujours des phases d'accélération nulle d'une durée d'au moins 1s qui peuvent être détectées permettent de définir une fenêtre glissante d'observation avec un début et une fin.

Un événement peut être par exemple le franchissement du pont par un camion C comme montré sur la figure 1 à titre d'exemple. Les déformations dynamiques peuvent, comme exposé ci-dessus, être provoquées par le trafic ou par des phénomènes naturels comme le vent ou une activité sismique par exemple.

Selon un mode particulier de réalisation, pour ne pas générer trop de données et accroître l'autonomie du système 3, on peut par exemple prévoir que les capteurs de mesure 7 ne soient activés que si par exemple, un poids lourds d'un certain tonnage franchit le pont 1. Les capteurs de mesure 7 sont par exemple mis en veille et le réveil des capteurs de mesure 7 peut être déclenché par un capteur de mouvement intégré dans la chaussée du pont, ou une caméra ou tout autre détecteur de passage d'un poids lourd par exemple.

Un tel événement va provoquer des vibrations et une déformation dynamique de l'objet 1 qui cause un déplacement de chaque point de référence 5.

Lors d'une première étape 101 (voir figure 2), on mesure par au moins un capteur 7 (ici onze capteurs 7) au niveau du point de référence 5 (ici onze points de référence 5) de l'objet 1, un profil temporel des accélérations selon une ou plusieurs directions prédéfinies, dans le présent cas parallèle à la force gravitationnelle G. Pour ce faire, on peut appliquer une fenêtre glissante d'observation de taille prédéfinie aux signaux de mesure des profils temporels des accélérations. La durée de la fenêtre glissante d'observation peut être déterminée par la détection d'évènements, c'est-à-dire entre deux observations d'une accélération nulle comme expliqué ci-dessus.

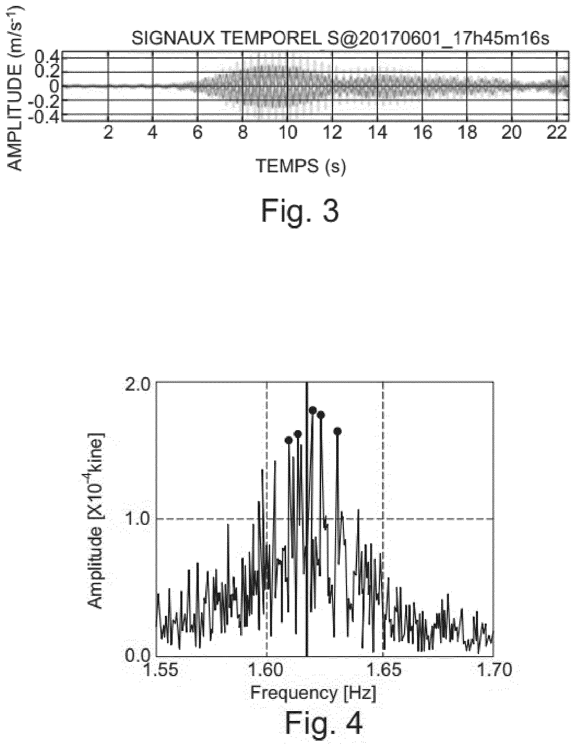

La figure 3 montre un exemple de mesure pour un pont 1 équipé de onze capteurs 7.

Sur la figure 3 est représenté un graphique montrant des signaux de mesure (amplitude) délivrés par les onze capteurs de mesure 7 en fonction du temps. Dans ce graphique, les signaux de mesure sont superposés, mais il faut garder à l'esprit que chaque capteur 7 est disposé à un endroit spécifique de l'objet 1, à son point de référence 5.

Ainsi, on constate que l'amplitude du signal de mesure délivrée par certains capteurs 7 est plus forte que l'amplitude du signal de mesure délivrée par d'autres capteurs 7. Cela signifie qu'à l'emplacement du capteur de mesure 7 de plus forte amplitude, le point de référence 5 associé s'est plus déplacé sous la contrainte extérieure auquel l'objet 1 est soumis (ici le pont 1) lors de l'événement que les autres points de référence 5.

On constate aussi que l'événement débute ici vers $t_1 = 5s$ et se termine vers $t_2 = 21s$. Lors de cette première étape 101, on va donc également détecter les phases d'accélérations « nulles » pour définir une ou plusieurs fenêtres d'observation. Ceci se fait par comparaison du signal de mesure pour chaque capteur 7 avec un seuil associé au capteur 7, généralement un seuil qui correspond à un signal de bruit.

Selon un mode de réalisation particulier, il faut que les phases d'accélérations « nulles » soient observées pour l'ensemble des capteurs de mesure 7 et ceci au même moment. C'est pourquoi il est important dans cet exemple de réalisation que les signaux de mesure des différents capteurs 7 soient synchronisés, par exemple par les nœuds de contrôle 8.

Selon une seconde étape 103, on réalise un préfiltrage au niveau de chaque point de référence 5 pour retirer la composante géométrique / statique de chaque signal de mesure.

Ceci peut par exemple être fait par un filtrage passe-bas ou passe-bande adapté réalisé par l'unité de traitement 9. La composante statique correspond donc au déplacement initial du ou de chaque capteur de mesure 7. En cas de plusieurs capteurs de mesures 7 disposés au niveau des points de référence 5, le déplacement initial est alors obtenu par le procédé décrit dans la demande de brevet WO 2006/095109 [merci de vérifier] permettant la reconstruction de formes à partir d'informations tangentielles. Le document WO 2006/095109 est incorporé par référence dans le présent document. Le profil temporel de l'accélération fourni par le signal de mesure de chaque capteur 7 peut être exprimé ou reconstruit sous forme de la convolution d'une source d'excitation non contrôlée (ou contrôlée) W(t) (W(t) représente le vent, un séisme, un impact par exemple) et d'une somme de produits de premières $G_k(t)$ et secondes $H_k(t)$ fonctions paramétrables.

Selon un premier mode de réalisation, le profil temporel de l'accélération *a(t)* peut s'exprimer selon l'équation (eq. 1) suivante :

$$a(t) = W(t) \otimes \sum_{k=1}^{N} e^{-\alpha_k t} a_k \sin(2\pi f_k t - \varphi_k) = \sum_{k=1}^{N} W(t) \otimes F_k(t)$$

$$= \sum_{k=1}^{N} W(t) \otimes (G_k H_k)(t) = \sum_{k=1}^{N} A_k(t)$$

Avec $\otimes$ l'opérateur de convolution :

$$(f \otimes g)(t) = \int f(t-s)g(s)ds$$

$$A_k(t) = (W \otimes F_k)(t)$$

$$F_k(t) = e^{-\alpha_k t} a_k \sin(2\pi f_k t - \varphi_k)$$

$$G_k(t) = e^{-\alpha_k t}$$

$$H_k(t) = a_k \sin(2\pi f_k t - \varphi_k)$$

$f_k$ - fréquence de décomposition comme par exemple une fréquence naturelle

$\alpha_k$ - facteur d'amortissements

$a_k$ - amplitude de la sinusoïde de fréquence $f_k$

$\varphi_k$ -déphasage

N - nombre entier correspondant au nombre de fréquences de décomposition. Le paramètre N est un paramètre qui peut être prédéterminé ou alors déterminé pour chaque fenêtre de calcul comme par exemple tel que l'énergie portée par les fréquences $f_1$, ..., $f_N$ représente 95% de l'énergie totale du spectre.

On suppose de plus que la relation suivante soit satisfaite $A_k(t) = (h_k \otimes a)(t)$ où $h_k$ est un filtre passe bande centrée sur la fréquence $f_k$ et qui coupe toutes les autres fréquences.

A chaque point de référence 5, l'accélération $a(t)$ peut donc s'exprimer sous forme d'une convolution entre la source d'excitation W(t) et d'une somme de produits de premières $G_k(t)$ et secondes $H_k(t)$ fonctions paramétrables par des coefficients $a_k$, $\alpha_k$, $f_k$, $\varphi_k$.

On constate que les premières fonctions paramétrables, ici des fonctions exponentielles décroissantes sous la forme $G_k(t) = e^{-a^k t}$ qui sont composées de facteurs d'amortissements, et les secondes fonctions paramétrables, ici sous la forme de fonctions périodiques sinus ou cosinus, par exemple $H_k(t) = a_k \sin(2\pi f_k t - \varphi_k)$ possèdent une solution analytique de double intégration. De plus, les premières et secondes fonctions sont telles que le produit $G_k(t) * H_k(t)$ possède également une solution analytique de double intégration.

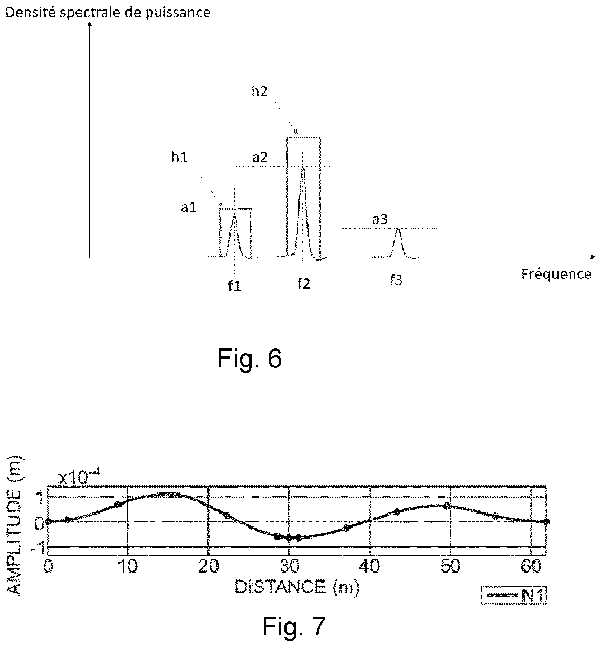

Selon une troisième étape 105 du procédé, on détermine les différents coefficients $\alpha_k$, $f_k$, et les coefficients des filtres passe-bande hk au niveau de chaque point de référence 5 et pour chaque capteur de mesure 7. Ces coefficients $\alpha_k$ et $f_k$ sont déterminés à partir de l'analyse spectrale des signaux de mesure et conformément à la description faite dans l'article « Frequencies and damping ratios of a high Rise Building based on Mircotremor measurement », par TARAKAWA, 2004, 13th World Conference on Earthquake Engineering Vancouver, B.C., Canada August 1-6, 2004 Paper No. 48 qui est incorporé par référence dans la présente description. Les coefficients des filtres passe-bande numériques sont calculées par des méthodes classiques de design de ce type de filtre, référence : Practical Analog and Digital Filter Design, Artech House, Inc. Les Thede 2004, accessible ici : http://dsp-book.narod.ru/PADFD.pdf. Le gabarit des filtres hk est déterminé pour conserver le signal autour de la fréquence fk et couper le reste du signal (cf. figure 6).

En particulier une fréquence de décomposition, en particulier une fréquence naturelle $f_k$ est déterminée comme par exemple montré sur la figure 4 comme la fréquence dont l'amplitude est proche de la moyenne des cinq amplitudes les plus importantes (dans le voisinage d'une fréquence naturelle de mode de l'objet dans le spectre de la transformée de Fourrier). Sur la figure 4, les cinq amplitudes les plus fortes sont marquées d'un point noir et la moyenne des cinq fréquences les plus fortes est marquée d'une ligne verticale.

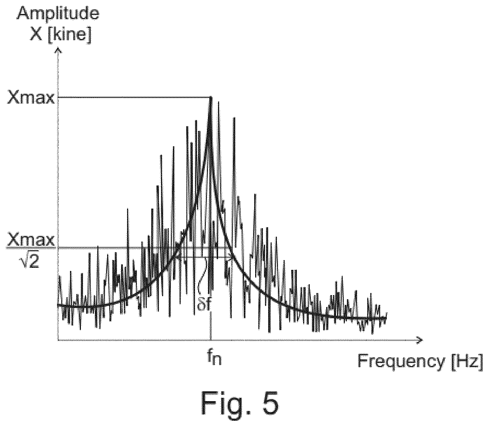

Sur la figure 5 est montré comment on détermine le facteur d'amortissement $\alpha_k$ pour une fréquence naturelle $f_k$ donnée, par la méthode $1/\sqrt{2}$.

Dans ce cas :

$$\alpha_k = \frac{1}{2} \frac{\delta f_k}{f_k}$$

$\delta f_k$ étant la largeur de bande dans le domaine des fréquences à amplitude maximale $X_{max}/\sqrt{2}$.

Pour plus de détails, on peut se référer à l'ouvrage suivant : Dynamic System de A.K. CHOPRA, Pearson, 2012, ISBN 10: 0-13-285803-7 incorporé par référence.

Les coefficients peuvent être déterminés une fois pour toute dans une phase d'initialisation d'observation de l'objet. Selon une variante ils peuvent être déterminés pour chaque fenêtre de temps.

Une fois les coefficients déterminés, et connaissant la solution analytique de double intégration de l'équation (eq. 1), on peut déterminer selon une quatrième étape 107, le déplacement du point de référence 5 selon la direction prédéfinie G dans le temps.

Pour un point de référence 5 donné, on a:

$$d(t) = (H_{procede} \otimes a)(t) \text{ pour } t \in [t_1, t_2] \qquad (eq. 2)$$

*Où t₁ et t₂* correspondent aux instants de début et fin d'un événement. Avec :

$$H_{\text{procede}}(t) = \sum_{k=1}^{N} b_k h_k(t) + c_k h_k(t + \tau_k) \qquad \text{(eq. 3)}$$

$$b_k = \frac{(\alpha_k^2 - 4\pi^2 f_k^2)}{(\alpha_k^2 + 4\pi^2 f_k^2)^2} \qquad \text{(eq. 4)}$$

$$c_k = \frac{4\pi \alpha_k f_k e^{\frac{\alpha_k}{4fk}}}{(\alpha_k^2 + 4\pi^2 f_k^2)^2} \qquad \text{(eq. 5)}$$

$h_k(t)$ : filtre passe-bande autour de la fréquence $f_k$

$$\tau_k = \frac{1}{4f_k} \qquad \text{(eq.6)}$$

La figure 6 montre sur un graphe un exemple de coefficients $a_i$, pour trois fréquences de décomposition $f_k$, et avec les filtres passe bandes associés $h_k$. La largueur des pics (à mi-hauteur) représente les $\alpha_k$

Le filtre $H_{\text{procede}}$ est tel que la dérivée seconde de d(t) dans l'équation (eq.2 ) correspond à l'accélération mesurée a(t) :

$$d''(t) = \left(H''_{\text{procede}} \otimes a\right)(t) = a(t) \qquad \text{(eq. 7)}$$

L'équation (eq. 2) synthétise le procédé de calcul du déplacement d(t) à partir d'une convolution entre le mesure a(t) et le filtre $H_{\text{procede}}$ paramétré par les coefficients $\alpha_k, f_k$.

On peut donc utiliser une formule analytique de filtrage appliquée aux données mesurées a(t) et dont le filtre à des paramètres estimés comme précisé plus haut.

Pour la détermination de ces solutions analytiques, il a été supposé pour les conditions initiales que l'accélération, la vitesse et le déplacement du point de référence 5 en question sont nulles. En présence d'une faible dissipation i.e. $\alpha_k \ll 2\pi f_k$, l'expression de $H_{\text{procede}}$ se simplifie comme suit :

$$H_{\text{procede}} \approx \sum_{k=1}^{N} -1/(4\pi^2 f_k^2)\, h_k(t) \qquad \text{(eq. 8)}$$

On voit donc que l'on peut déterminer à l'aide du procédé selon l'invention avec précision le déplacement de chaque point de référence 5 suite à une contrainte extérieure subie par l'objet 1.

La figure 6 montre un exemple de résultat obtenu par le procédé selon l'invention. Pour un instant t donné, le graphique montre des amplitudes de déplacement à différents points de référence 5 sur le pont 1. En utilisant une interpolation par exemple du type « spline », entre les différents points de référence, on remonte au comportement dynamique de l'objet 1 observé selon un ou plusieurs axes.

On peut aussi reconstruire les modes propres de l'objet. Par la suite, une analyse de ces déformations dans le temps permet de tracer un historique et de déterminer et localiser des altérations ou anomalies nécessitant une intervention sur l'ouvrage.

En alternative aux fonctions sinus / cosinus, on peut aussi utiliser comme secondes fonctions paramétrables, des fonctions exponentielles à exposant imaginaire, des fonctions sinus et cosinus hyperboliques ou fonctions polynomiales dont les coefficients peuvent être déterminés par régression.

Par ailleurs, l'invention peut être appliquée de la même façon que exposée ci-dessus dans le cas où au lieu d'une source W(t) il y a une somme finie de M sources Wi(t).

Dans ce cas, l'équation 1 ci-dessus prend une forme plus générale comme suit :

$$a(t) = \sum_{i=1}^{M} W_i(t) \otimes \sum_{k=1}^{N} e^{-\alpha_k t} a_{k,i} \sin(2\pi f_k t - \varphi_k) \qquad \text{(eq. 9)}$$

mais le traitement par la suite reste analogue à celui exposé ci-dessus avec une seule source d'excitation.

On note que tous les documents cités sont incorporés par référence dans la présente description.

**Revendications**

1. Procédé de détermination d'un déplacement d'au moins un point de référence (5) d'un ouvrage d'infrastructure dénommé objet (1) lors d'un événement, un événement étant défini par le fait que l'accélération du point de référence (5) de l'objet (1) est nulle pendant une durée prédéfinie avant et après l'événement, dans lequel

   - on mesure de manière synchronisée avec plusieurs capteurs de mesure (7) associés à plusieurs points de référence (5), des profils temporels des accélérations selon au moins une direction prédéfinie (G), les profils temporels des accélérations étant traités en retirant une composante statique et/ou géométrique,

   **caractérisé en ce que** :

   - on détermine des coefficients de premières et secondes fonctions paramétrables, les dites premières fonctions paramétrables étant des fonctions exponentielles décroissantes et lesdites secondes fonctions paramétrables étant des fonctions polynomiales ou des fonction périodiques sinus ou cosinus, lesdites premières et secondes fonctions paramétrables permettant de reconstruire le profil temporel des accélérations sous forme de la convolution d'une source d'excitation et d'une somme de produits de premières et secondes fonctions paramétrables par des coefficients, chacune des premières et secondes fonctions paramétrables dont le produit possède une solution analytique de double intégration et les premières fonctions étant composées de facteurs d'amortissements,
   - on détermine à partir de la solution analytique de double intégration de la convolution entre la source et la somme de produits de première et seconde fonctions paramétrables et des coefficients déterminés des premières et secondes fonctions, le déplacement des points de référence (5) dudit objet selon au moins la direction prédéfinie (G) dans le temps lors d'un événement afin de déterminer des dégradations dudit ouvrage d'infrastructure.

2. Procédé selon la revendications 1, dans lequel le profil temporel de l'accélération fournit par le signal de mesure de chaque capteur (7) est exprimé sous forme de la convolution d'une source d'excitation W(t) et d'une somme de produits de premières $G_k(t)$ et secondes $H_k(t)$ fonctions paramétrables, le profil temporel de l'accélération $a(t)$ étant exprimé selon l'équation suivante :

$$a(t) = W(t) \otimes \sum_{k=1}^{N} e^{-\alpha_k t} a_k \sin\left(2\pi f_k t - \varphi_k\right) = \sum_{k=1}^{N} W(t) \otimes F_k(t)$$

$$= \sum_{k=1}^{N} W(t) \otimes (G_k H_k)(t) = \sum_{k=1}^{N} A_k(t)$$

avec $\otimes$ l'opérateur de convolution :

$$(f \otimes g)(t) = \int f(t-s) g(s) \, ds$$

$$A_k(t) = (W \otimes F_k)(t)$$

$$F_k(t) = e^{-\alpha_k t} a_k \sin\left(2\pi f_k t - \varphi_k\right)$$

$$G_k(t) = e^{-\alpha_k t}$$

$$H_k(t) = a_k \sin\left(2\pi f_k t - \varphi_k\right)$$

$f_k$ - fréquence de décomposition comme par exemple une fréquence naturelle

$\alpha_k$ - facteur d'amortissements

$a_k$ - amplitude de la sinusoïde de fréquence $f_k$

$\varphi_k$ -déphasage

N - nombre entier correspondant au nombre de fréquences de décomposition.

3. Procédé selon l'une quelconque des revendications précédentes, dans lequel chaque point de référence (5) est associé à un capteur de mesure (7) et les points de références (5) sont distribués sur l'objet (1) selon un maillage prédéfini, notamment à maille régulière ou irrégulière, comme sur une ligne, en particulier une ligne droite, ou une ou plusieurs faces de l'objet (1).

4. Procédé selon la revendication 3, dans lequel les points de référence (5) sont espacés régulièrement selon un axe longitudinal de l'objet (1) perpendiculaire à une direction de la force gravitationnelle (G).

5. Procédé selon l'une quelconque des revendications 1 à 4, dans lequel on estime dans chaque point de référence (5) le déplacement $d(t)$ d'un point de référence (5) de l'objet (1) en fonction du temps t en utilisant la formule suivante :

$$d(t) = (H_{\text{procede}} \otimes a)(t) \text{ pour } t \, \epsilon \, [t_1, t_2]$$

où $t_1$ et $t_2$ correspondent aux instants de début et fin d'un événement. avec :

$$H_{\text{procede}}(t) = \sum_{k=1}^{N} b_k h_k(t) + c_k h_k\left(t + \tau_k\right)$$

$$b_k = \frac{\left(\alpha_k^2 - 4\pi^2 f_k^2\right)}{\left(\alpha_k^2 + 4\pi^2 f_k^2\right)^2}$$

$$c_k = \frac{4\pi \alpha_k f_k e^{\frac{\alpha_k}{4f_k}}}{\left(\alpha_k^2 + 4\pi^2 f_k^2\right)^2}$$

$h_k(t)$ : filtre passe-bande autour de la fréquence $f_k$

$$\tau_k = \frac{1}{4f_k} \, .$$

6. Système (3) de détermination d'un déplacement d'au moins un point de référence (5) d'un ouvrage d'infrastructure dénommé objet (1) lors d'un événement, un événement étant défini par le fait que l'accélération du point de référence (5) de l'objet (1) est nulle pendant une durée prédéfinie avant et après l'événement, comprenant

- plusieurs capteurs de mesure (7) synchronisés associés à plusieurs points de référence (5), notamment un accéléromètre MEMS, et configuré pour mesurer de manière synchronisée des profils temporels des accélérations selon au moins une direction prédéfinie (G),
- une unité de traitement (9) configurée pour
- traiter les profils temporels des accélérations en retirant une composante statique et / ou géométrique ,
- déterminer des coefficients de premières et secondes fonctions paramétrables, les dites premières fonctions paramétrables étant des fonctions exponentielles décroissantes et lesdites secondes fonctions paramétrables étant des fonctions polynomiales ou des fonction périodiques sinus ou cosinus, lesdites premières et secondes fonctions paramétrables permettant de reconstruire le profil temporel des accélérations sous forme de la convolution d'une source d'excitation et d'une somme de produits de premières et secondes fonctions paramétrables par des coefficients, chacune des premières et secondes fonctions paramétrables dont le produit possède une solution analytique de double intégration et les premières fonctions étant composées de facteurs d'amortissements

○ déterminer à partir de la solution analytique de double intégration de la convolution entre la source et la somme de produits de première et seconde fonctions paramétrables et des coefficients déterminés des premières et secondes fonctions, le déplacement des points de référence (5) dudit objet selon au moins la direction prédéfinie (G) dans le temps lors d'un événement afin de déterminer des dégradations dudit ouvrage d'infrastructure..

7. Système selon la revendication 6, selon lequel l'unité de traitement est configurée pour exprimer le profil temporel de l'accélération fournit par le signal de mesure de chaque capteur (7) sous forme de la convolution d'une source d'excitation W(t) et d'une somme de produits de premières $G_k(t)$ et secondes $H_k(t)$ fonctions paramétrables, le profil temporel de l'accélération $a(t)$ étant exprimé selon l'équation suivante :

$$a(t) = W(t) \otimes \sum_{k=1}^{N} e^{-\alpha_k t} a_k \sin\left(2\pi f_k t - \varphi_k\right) = \sum_{k=1}^{N} W(t) \otimes F_k(t)$$

$$= \sum_{k=1}^{N} W(t) \otimes (G_k H_k)(t) = \sum_{k=1}^{N} A_k(t)$$

avec $\otimes$ l'opérateur de convolution :

$$(f \otimes g)(t) = \int f(t-s)\, g(s)\, ds$$

$$A_k(t) = (W \otimes F_k)(t)$$

$$F_k(t) = e^{-\alpha_k t} a_k \sin\left(2\pi f_k t - \varphi_k\right)$$

$$G_k(t) = e^{-\alpha_k t}$$

$$H_k(t) = a_k \sin\left(2\pi f_k t - \varphi_k\right)$$

$f_k$ - fréquence de décomposition comme par exemple une fréquence naturelle
$\alpha_k$ - facteur d'amortissements
$\alpha_k$ - amplitude de la sinusoïde de fréquence $f_k$
$\varphi_k$ -déphasage
N - nombre entier correspondant au nombre de fréquences de décomposition.

8. Système selon l'une quelconque des revendications 6 à 7, dans lequel les points de références (5) sont distribués sur l'objet (1) selon un maillage prédéfini, notamment à maille régulière ou irrégulière, comme sur une ligne, en particulier une ligne droite, ou une ou plusieurs faces de l'objet (1).

9. Système selon l'une quelconque des revendications 6 à 8, dans lequel l'unité de traitement (9) est configurée pour estimer le déplacement $d(t)$ de chaque point de référence (5) de l'objet (1) en fonction du temps t en utilisant la formule suivante :

$$d(t) = (H_{\text{procede}} \otimes a)(t) \text{ pour } t \in [t_1, t_2]$$

où $t_1$ et $t_2$ correspondent aux instants de début et fin d'un événement. avec :

$$H_{\text{procede}}(t) = \sum_{k=1}^{N} b_k h_k(t) + c_k h_k\left(t + \tau_k\right)$$

$$b_k = \frac{\left(\alpha_k^2 - 4\pi^2 f_k^2\right)}{\left(\alpha_k^2 + 4\pi^2 f_k^2\right)^2}$$

$$c_k = \frac{4\pi \alpha_k f_k e^{\frac{\alpha_k}{4f_k}}}{\left(\alpha_k^2 + 4\pi^2 f_k^2\right)^2}$$

$h_k(t)$ : filtre passe-bande autour de la fréquence $f_k$

$$\tau_k = \frac{1}{4 f_k}\ .$$

**Patentansprüche**

1.  Verfahren zur Bestimmung einer Bewegung mindestens eines Referenzpunkts (5) eines Infrastrukturbauwerks, Objekt (1) genannt, bei einem Ereignis, wobei ein Ereignis durch die Tatsache definiert ist, dass die Beschleunigung des Referenzpunkts (5) des Objekts (1) während einer vorgegebenen Dauer vor und nach dem Ereignis null ist, wobei

    - man auf synchronisierte Weise mit mehreren Messsensoren (7), die mehreren Referenzpunkten (5) zugeordnet sind, zeitliche Profile der Beschleunigungen entlang mindestens einer vorgegebenen Richtung (G) misst, wobei die zeitlichen Profile der Beschleunigungen verarbeitet werden, indem eine statische und/oder geometrische Komponente entzogen wird,

    **dadurch gekennzeichnet, dass**:

    - man Koeffizienten von ersten und zweiten parametrierbaren Funktionen bestimmt, wobei die ersten parametrierbaren Funktionen fallende Exponentialfunktionen sind und wobei die zweiten parametrierbaren Funktionen Polynomfunktionen oder periodische Sinus- oder Kosinusfunktionen sind, wobei die ersten und zweiten parametrierbaren Funktionen es ermöglichen, das zeitliche Profil der Beschleunigungen in Form der Faltung einer Anregungsquelle und einer Summe von Produkten von ersten und zweiten parametrierbaren Funktionen mit Koeffizienten zu rekonstruieren, wobei jede der ersten und zweiten parametrierbaren Funktionen, deren Produkt eine analytische Doppelintegrationslösung besitzt, und die ersten Funktionen aus Dämpfungsfaktoren zusammengesetzt sind,
    - man ausgehend von der analytischen Doppelintegrationslösung der Faltung zwischen der Quelle und der Summe von Produkten von ersten und zweiten parametrierbaren Funktionen und bestimmten Koeffizienten der ersten und zweiten Funktionen die Bewegung der Referenzpunkte (5) des Objekts entlang mindestens der vorgegebenen Richtung (G) im Laufe der Zeit bei einem Ereignis bestimmt, um Schädigungen des Infrastrukturbauwerks zu bestimmen.

2.  Verfahren nach Anspruch 1, wobei das zeitliche Profil der Beschleunigung, das von dem Messsignal jedes Sensors (7) ausgegeben wird, in Form der Faltung einer Anregungsquelle W(t) und einer Summe von Produkten von ersten $G_k$(t) und zweiten $H_k$(t) parametrierbaren Funktionen ausgedrückt wird, wobei das zeitliche Profil der Beschleunigung a(t) nach der folgenden Gleichung ausgedrückt wird:

$$a(t) = W(t) \otimes \sum_{k=1}^{N} e^{-\alpha_k t} a_k \sin\left(2\pi f_k t - \varphi_k\right) = \sum_{k=1}^{N} W(t) \otimes F_k(t)$$

$$= \sum_{k=1}^{N} W(t) \otimes (G_k H_k)(t) = \sum_{k=1}^{N} A_k(t)$$

mit $\otimes$ Faltungsoperator:

$$(f \otimes g)(t) = \int f(t-s)\, g(s)\, ds$$

$$A_k(t) = (W \otimes F_k)(t)$$

$$F_k(t) = e^{-\alpha_k t} a_k \sin\left(2\pi f_k t - \varphi_k\right)$$

$$G_k(t) = e^{-\alpha_k t}$$

$$H_k(t) = a_k \sin\left(2\pi f_k t - \varphi_k\right)$$

$f_k$ - Zerlegungsfrequenz wie zum Beispiel eine natürliche Frequenz
$\alpha_k$ - Dämpfungsfaktor
$a_k$ - Amplitude des Sinusoids mit der Frequenz $f_k$ $\varphi_k$ - Phasenverschiebung
N - ganze Zahl, entsprechend der Anzahl von Zerlegungsfrequenzen.

3. Verfahren nach einem der vorhergehenden Ansprüche, wobei jeder Referenzpunkt (5) einem Messsensor (7) zugeordnet ist und die Referenzpunkte (5) auf dem Objekt (1) gemäß einem vorgegebenen Netz, insbesondere mit regelmäßiger oder unregelmäßiger Masche, wie auf einer Linie, insbesondere einer geraden Linie, oder einer oder mehreren Flächen des Objekts (1) verteilt sind.

4. Verfahren nach Anspruch 3, wobei die Referenzpunkte (5) entlang einer Längsachse des Objekts (1), die senkrecht zu einer Richtung der Gravitationskraft (G) verläuft, regelmäßig beabstandet sind.

5. Verfahren nach einem der Ansprüche 1 bis 4, wobei man in jedem Referenzpunkt (5) die Bewegung d(t) eines Referenzpunkts (5) des Objekts (1) in Abhängigkeit von der Zeit t unter Verwendung der folgenden Formel schätzt:

$$d(t) = (H_{\text{Verfahren}} \otimes a)(t) \text{ für } t \in [t_1, t_2]$$

worin $t_1$ und $t_2$ den Beginn- und Endezeitpunkten eines Ereignisses entsprechen. mit:

$$H_{\text{Verfahren}}(t) = \sum_{k=1}^{N} b_k h_k(t) + c_k h_k\left(t + \tau_k\right)$$

$$b_k = \frac{\left(\alpha_k^2 - 4\pi^2 f_k^2\right)}{\left(\alpha_k^2 + 4\pi^2 f_k^2\right)^2}$$

$$c_k = \frac{4\pi \alpha_k f_k e^{\frac{\alpha_k}{4f_k}}}{\left(\alpha_k^2 + 4\pi^2 f_k^2\right)^2}$$

$h_k(t)$: Bandpassfilter um die Frequenz $f_k$

$$\tau_k = \frac{1}{4f_k}\,.$$

6. System (3) zur Bestimmung einer Bewegung mindestens eines Referenzpunkts (5) eines Infrastrukturbauwerks, Objekt (1) genannt, bei einem Ereignis, wobei ein Ereignis durch die Tatsache definiert ist, dass die Beschleunigung des Referenzpunkts (5) des Objekts (1) während einer vorgegebenen Dauer vor und nach dem Ereignis null ist, umfassend

    - mehrere synchronisierte Messsensoren (7), die mehreren Referenzpunkten (5) zugeordnet sind, insbesondere einen MEMS-Beschleunigungsmesser, und dazu ausgestaltet, auf synchronisierte Weise zeitliche Profile der Beschleunigungen entlang mindestens einer vorgegebenen Richtung (G) zu messen,
    - eine Verarbeitungseinheit (9), die dazu ausgestaltet ist
    - die zeitlichen Profile der Beschleunigungen zu verarbeiten, indem eine statische und/oder geometrische Komponente entzogen wird,
    - Koeffizienten von ersten und zweiten parametrierbaren Funktionen zu bestimmen, wobei die ersten parametrierbaren Funktionen fallende Exponentialfunktionen sind und wobei die zweiten parametrierbaren Funktionen Polynomfunktionen oder periodische Sinus- oder Kosinusfunktionen sind, wobei die ersten und zweiten parametrierbaren Funktionen es ermöglichen, das zeitliche Profil der Beschleunigungen in Form der Faltung einer Anregungsquelle und einer Summe von Produkten von ersten und zweiten parametrierbaren Funktionen mit Koeffizienten zu rekonstruieren, wobei jede der ersten und zweiten parametrierbaren Funktionen, deren Produkt eine analytische Doppelintegrationslösung besitzt, und die ersten Funktionen aus Dämpfungsfaktoren zusammengesetzt sind

        ∘ ausgehend von der analytischen Doppelintegrationslösung der Faltung zwischen der Quelle und der Summe von Produkten von ersten und zweiten parametrierbaren Funktionen und bestimmten Koeffizienten der ersten und zweiten Funktionen die Bewegung der Referenzpunkte (5) des Objekts entlang mindestens der vorgegebenen Richtung (G) im Laufe der Zeit bei einem Ereignis zu bestimmen, um Schädigungen des Infrastrukturbauwerks zu bestimmen.

7. System nach Anspruch 6, wobei die Verarbeitungseinheit dazu ausgestaltet ist, das zeitliche Profil der Beschleunigung, das von dem Messsignal jedes Sensors (7) ausgegeben wird, in Form der Faltung einer Anregungsquelle $W(t)$ und einer Summe von Produkten von ersten $G_K(t)$ und zweiten $H_K(t)$ parametrierbaren Funktionen auszudrücken, wobei das zeitliche Profil der Beschleunigung $a(t)$ nach der folgenden Gleichung ausgedrückt wird:

$$a(t) = W(t) \otimes \sum_{k=1}^{N} e^{-\alpha_k t} a_k \sin\left(2\pi f_k t - \varphi_k\right) = \sum_{k=1}^{N} W(t) \otimes F_k(t)$$

$$= \sum_{k=1}^{N} W(t) \otimes (G_k H_k)(t) = \sum_{k=1}^{N} A_k(t)$$

mit $\otimes$ Faltungsoperator:

$$(f \otimes g)(t) = \int f(t - s) g(s)\, ds$$

$$A_k(t) = (W \otimes F_k)(t)$$

$$F_k(t) = e^{-\alpha_k t} a_k \sin\left(2\pi f_k t - \varphi_k\right)$$

$$G_k(t) = e^{-\alpha_k t}$$

$$H_k(t) = a_k \sin\left(2\pi f_k t - \varphi_k\right)$$

$f_k$ - Zerlegungsfrequenz wie zum Beispiel eine natürliche Frequenz
$\alpha_k$ - Dämpfungsfaktor
$a_k$ - Amplitude des Sinusoids mit der Frequenz $f_k$ $\varphi_k$ - Phasenverschiebung
N - ganze Zahl, entsprechend der Anzahl von Zerlegungsfrequenzen.

8. System nach einem der Ansprüche 6 bis 7, wobei die Referenzpunkte (5) auf dem Objekt (1) gemäß einem vorgegebenen Netz, insbesondere mit regelmäßiger oder unregelmäßiger Masche, wie auf einer Linie, insbesondere einer geraden Linie, oder einer oder mehreren Flächen des Objekts (1) verteilt sind.

9. System nach einem der Ansprüche 6 bis 8, wobei die Verarbeitungseinheit (9) dazu ausgestaltet ist, die Bewegung $d(t)$ jedes Referenzpunkts (5) des Objekts (1) in Abhängigkeit von der Zeit t unter Verwendung der folgenden Formel zu schätzen:

$$d(t) = (H_{\text{Verfahren}} \otimes a)(t) \text{ für } t \in [t_1, t_2]$$

worin $t_1$ und $t_2$ den Beginn- und Endezeitpunkten eines Ereignisses entsprechen. mit:

$$H_{\text{Verfahren}}(t) = \sum_{k=1}^{N} b_k h_k(t) + c_k h_k\left(t + \tau_k\right)$$

$$b_k = \frac{\left(\alpha_k^2 - 4\pi^2 f_k^2\right)}{\left(\alpha_k^2 + 4\pi^2 f_k^2\right)^2}$$

EP 3 803 637 B1

$$c_k = \frac{4\pi \alpha_k f_k e^{\frac{\alpha_k}{4f_k}}}{\left(\alpha_k^2 + 4\pi^2 f_k^2\right)^2}$$

$h_k(t)$: Bandpassfilter um die Frequenz $f_k$

$$\tau_k = \frac{1}{4f_k}.$$

## Claims

1. Method for determining a movement of at least one reference point (5) of a piece of infrastructure, which is referred to as the object (1), during an event, an event being defined by the fact that the acceleration of the reference point (5) of the object (1) is zero for a predefined time before and after the event, in which

   - temporal profiles of the accelerations in at least one predefined direction (G) are measured synchronously with a plurality of measuring sensors (7) associated with a plurality of reference points (5), the temporal profiles of the accelerations being processed so as to remove a static and/or geometric component,

   **characterized in that**:

   - coefficients of first and second parameterizable functions are determined, said first parameterizable functions being decreasing exponential functions and said second parameterizable functions being polynomial functions or periodic sine or cosine functions, said first and second parameterizable functions making it possible to reconstruct the temporal profile of the accelerations in the form of the convolution of an excitation source and of a sum of products of first and second functions parameterizable by coefficients, each of the first and second parameterizable functions the product of which possesses an analytical double-integration solution and the first functions containing damping factors,
   - based on the analytical double-integration solution of the convolution between the source and the sum of products of first and second parameterizable functions and of the determined coefficients of the first and second functions, the movement of the reference points (5) of said object in at least the predefined direction (G) in time during an event is determined in order to determine degradation of said piece of infrastructure.

2. Method according to Claim 1, wherein the temporal profile of the acceleration delivered by the measurement signal of each sensor (7) is expressed in the form of the convolution of an excitation source W(t) and of a sum of products of first and second parameterizable functions $G_k(t)$, $H_k(t)$, the temporal profile of the acceleration a(t) being expressed according to the following equation:

$$a(t) = W(t) \otimes \sum_{k=1}^{N} e^{-\alpha_k t} a_k \sin\left(2\pi f_k t - \varphi_k\right) = \sum_{k=1}^{N} W(t) \otimes F_k(t)$$

$$= \sum_{k=1}^{N} W(t) \otimes (G_k H_k)(t) = \sum_{k=1}^{N} A_k(t)$$

with $\otimes$ the convolution operator:

$$(f \otimes g)(t) = \int f(t-s) g(s) \, ds$$

19

$$A_k(t) = (W \otimes F_k)(t)$$

$$F_k(t) = e^{-\alpha_k t} a_k \sin(2\pi f_k t - \varphi_k)$$

$$G_k(t) = e^{-\alpha_k t}$$

$$H_k(t) = a_k \sin(2\pi f_k t - \varphi_k)$$

$f_k$ - decomposition frequency such as, for example, a natural frequency
$\alpha_k$ - damping factor
$a_k$ - amplitude of the sinusoid of frequency $f_k$ $\varphi_k$ - phase shift
N - integer corresponding to the number of decomposition frequencies.

3. Method according to either of the preceding claims, wherein each reference point (5) is associated with one measuring sensor (7) and the reference points (5) are distributed over the object (1) in a predefined grid, in particular a regular or irregular grid, such as on a line, in particular a straight line, or on one or more faces of the object (1).

4. Method according to Claim 3, wherein the reference points (5) are regularly spaced along a longitudinal axis of the object (1) perpendicular to a direction of gravity (G).

5. Method according to any of Claims 1 to 4, wherein at each reference point (5) the movement d(t) of a reference point (5) of the object (1) is estimated as a function of time t using the following formula:

$$d(t) = (H_{\text{method}} \otimes a)(t) \text{ for } t \in [t_1, t_2]$$

where $t_1$ and $t_2$ are the start and end times of an event, with:

$$H_{\text{method}}(t) = \sum_{k=1}^{N} b_k h_k(t) + c_k h_k(t + \tau_k)$$

$$b_k = \frac{\left(\alpha_k^2 - 4\pi^2 f_k^2\right)}{\left(\alpha_k^2 + 4\pi^2 f_k^2\right)^2}$$

$$c_k = \frac{4\pi \alpha_k f_k e^{\frac{\alpha_k}{4f_k}}}{\left(\alpha_k^2 + 4\pi^2 f_k^2\right)^2}$$

$h_k(t)$: band-pass filter around the frequency $f_k$

$$\tau_k = \frac{1}{4f_k}.$$

6. System (3) for determining a movement of at least one reference point (5) of a piece of infrastructure, which is referred to as the object (1), during an event, an event being defined by the fact that the acceleration of the reference point (5) of the object (1) is zero for a predefined time before and after the event, comprising

- a plurality of synchronized measuring sensors (7), in particular MEMS accelerometers, associated with a plurality of reference points (5) and configured to synchronously measure temporal profiles of accelerations in at least one predefined direction (G),
- a processing unit (9) configured to
- process the temporal profiles of the accelerations so as to remove a static and/or geometric component,
- determine coefficients of first and second parameterizable functions, said first parameterizable functions being decreasing exponential functions and said second parameterizable functions being polynomial functions or periodic sine or cosine functions, said first and second parameterizable functions making it possible to reconstruct the temporal profile of the accelerations in the form of the convolution of an excitation source and of a sum of products of first and second functions parameterizable by coefficients, each of the first and second parameterizable functions the product of which possesses an analytical double-integration solution and the first functions containing damping factors,

o determine, based on the analytical double-integration solution of the convolution between the source and the sum of products of first and second parameterizable functions and of the determined coefficients of the first and second functions, the movement of the reference points (5) of said object in at least the predefined direction (G) in time during an event in order to determine degradation of said piece of infrastructure.

7. System according to Claim 6, wherein the processing unit is configured to express the temporal profile of the acceleration delivered by the measurement signal of each sensor (7) in the form of the convolution of an excitation source W(t) and of a sum of products of first and second parameterizable functions $G_k(t)$, $H_k(t)$, the temporal profile of the acceleration $a(t)$ being expressed according to the following equation:

$$a(t) = W(t) \otimes \sum_{k=1}^{N} e^{-\alpha_k t} a_k \sin\left(2\pi f_k t - \varphi_k\right) = \sum_{k=1}^{N} W(t) \otimes F_k(t)$$

$$= \sum_{k=1}^{N} W(t) \otimes (G_k H_k)(t) = \sum_{k=1}^{N} A_k(t)$$

with $\otimes$ the convolution operator:

$$(f \otimes g)(t) = \int f(t-s)\, g(s)\, ds$$

$$A_k(t) = (W \otimes F_k)(t)$$

$$F_k(t) = e^{-\alpha_k t} a_k \sin\left(2\pi f_k t - \varphi_k\right)$$

$$G_k(t) = e^{-\alpha_k t}$$

$$H_k(t) = a_k \sin\left(2\pi f_k t - \varphi_k\right)$$

$f_k$ - decomposition frequency such as, for example, a natural frequency
$\alpha_k$ - damping factor
$a_k$ - amplitude of the sinusoid of frequency $f_k$ $\varphi_k$ - phase shift
N - integer corresponding to the number of decomposition frequencies.

8. System according to either of Claims 6 and 7, wherein the reference points (5) are distributed over the object (1) in a predefined grid, in particular a regular or irregular grid, such as on a line, in particular a straight line, or on one or more faces of the object (1).

9. System according to any of Claims 6 to 8, wherein the processing unit (9) is configured to estimate the movement d(t) of each reference point (5) of the object (1) as a function of time t using the following formula:

$$d(t) = (H_{\text{method}} \otimes a)(t) \text{ for } t \in [t_1, t_2]$$

where $t_1$ and $t_2$ are the start and end times of an event, with:

$$H_{\text{method}}(t) = \sum_{k=1}^{N} b_k h_k(t) + c_k h_k(t + \tau_k)$$

$$b_k = \frac{\left(\alpha_k^2 - 4\pi^2 f_k^2\right)}{\left(\alpha_k^2 + 4\pi^2 f_k^2\right)^2}$$

$$c_k = \frac{4\pi \alpha_k f_k e^{\frac{\alpha_k}{4f_k}}}{\left(\alpha_k^2 + 4\pi^2 f_k^2\right)^2}$$

$h_k(t)$: band-pass filter around the frequency $f_k$

$$\tau_k = \frac{1}{4f_k}$$.

Fig. 1

Fig. 2

Fig. 3

Fig. 4

Fig. 5

Densité spectrale de puissance

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006095109 A

**Littérature non-brevet citée dans la description**

- **KITAE PARK et al.** *Engineering Structures*, 2005, vol. 27, 371-378
- **F.SIVRIKAYA** ; **B.YENER**. Time Synchronization in Sensor Networks: A Survey. *IEEE Networks*, 2004
- **B. SUNDARARAMAN** ; **U. BUY** ; **A.D. KSHEMKA-LYANI**. Clock Synchronization in Wireless Sensor Networks: A Survey. *Ad-Hoc Networks*, 2005
- **J. ELSON** ; **L. GIROD** ; **D. ESTRIN**. Fine Grained Network Time Synchronization using Reference Broadcasts.. *Proc. Fifth Symposium on Operating Systems Design and Implementation (OSDI 2002)*, 2002, vol. 36, 147-163
- **J. ELSON** ; **K. ROMER.** Wireless Sensor Networks: A New Regime for Time Synchronization. *Proc. First Workshop on Hot Topics In Networks (HotNets-I)*, October 2002
- **R. C. SHAH** ; **J. RABAEY**. Energy Aware Routing for Low Energy Ad hoc Sensor Networks. *IEEE Wireless Communication Conference (WCNC)*, March 2002, 350-355
- Network<wide Time Synchronization in Sensor Networks.. **S. GANERIWAL** ; **R. KUMAR** ; **S. ADLAKHA** ; **M. SRIVASTAVA.** Technical Report, Networked and Embedded Systems Lab. Elec. Eng. Dept., UCLA, 2003

- **K. ROMER**. Time Synchronization in Ad Hoc Networks.. *Proc. ACM Symposium on Mobile Ad Hoc Networking and Computing (MobiHoc '01)*, October 2001, 173-182
- **M. L. SICHITIU AND C. VEERARITTIPHAN**. Simple, Accurate Time Synchronization for Wireless Sensor Networks. *Proc. IEEE Wireless Communications and Networking Conference (WCNC 2003)*, 2003
- **J. VAN GREUNEN** ; **J. RABAEY.** Lightweight Time Synchronization for Sensor Networks.. *Proc. 2nd, ACM Int. Workshop on Wireless Sensor Networks and Applications (WSNA '03)*, September 2000
- **T ARAKAWA**. Frequencies and damping ratios of a high Rise Building based on Mircotremor measurement. *13th World Conference on Earthquake Engineering Vancouver,*, 2004 (48)
- Practical Analog and Digital Filter Design. Artech House, Inc., 2004
- **A.K. CHOPRA**. Dynamic System. Pearson, 2012